# EUROPEAN PATENT SPECIFICATION

(11) **EP 2 476 570 B1**
(45) Date of publication and mention of the grant of the patent: **01.11.2017**
(21) Application number: 12151478.0
(22) Date of filing: 18.01.2012
(51) Int. Cl.: B60K 7/00, A47L 9/00, B60K 17/04

(54) **Robot cleaner**
Reinigungsroboter
Robot nettoyeur

(30) Priority: 18.01.2011 KR 20110005157
(43) Date of publication of application: 18.07.2012
(73) Proprietor: Samsung Electronics Co., Ltd., Suwon-si, Gyeonggi-do, 443-742 (KR)
(72) Inventor: Moon, Joo Sung, Gwangju (KR); Hwang, Yun Sup, Gwangju (KR); Song, Jeong Gon, Gwangju-City (KR); Kim, Myeong Ho, Gwangju (KR); Kim Kyoung Woun, Gwangju (KR)
(74) Representative: Grünecker Patent- und Rechtsanwälte PartG mbB

(56) References cited:
- GB-A- 2 400 087
- KR-B1- 100 779 195
- US-A1- 2005 027 396
- US-B2- 7 213 663

## Description

### BACKGROUND

### 1. Field

Embodiments of the present disclosure relate to a robot cleaner in which drive wheels vertically move.

### 2. Description of the Related Art

In general, a robot cleaner sucks foreign substances, such as dust, from the surface of a floor in an area to be cleaned while autonomously traveling about the area to be cleaned, thus performing a cleaning operation. The robot cleaner generally includes a drive device and a cleaning device.

The drive device of the robot cleaner includes a pair of drive wheels provided at the lower portion of a main body of the robot cleaner, a pair of drive motors to supply drive power to the drive wheels, a battery to supply power to the drive motors, and various sensors and a control unit to control the drive wheels. The cleaning device of the robot cleaner includes a brush, a suction fan, filter, and a dust collection tray.

The drive wheels are installed so as to be movable with respect to the main body, thereby allowing the robot cleaner to easily climb over an obstacle, such as a carpet or a door sill during traveling. For example, each of the drive wheels is installed within a wheel housing divided into an upper wheel housing part and a lower wheel housing part. Each of the drive wheels is installed on the main body through the upper wheel housing part and is movable with respect to the main body by a hinge shaft provided on the lower wheel housing part.

In the conventional robot cleaner, since both the drive wheel and the drive motor connected to the drive wheel through a gear box are movable by the above-described hinge shaft, a main board of the main body and a PCB of the drive motor needs to be connected by a wire, and thus contact therebetween may be unstable during a long period of use. Further, the PCB to control the drive motor continuously comes into contact with dust introduced from the floor, and thus may malfunction.

KR 10079195 B1 discloses a robot cleaner with a main body and drive motors provided on the main body. Each drive motor includes a rotary shaft and the drive wheels are rotated by rotary force transmitted from the drive motors. Gear units connect the drive motors and the drive wheels.

The corresponding gear unit comprises a number of gears and further a gear transferring guide for pivoting the driving wheel with respect to the motor.

It is an object of the present disclosure to provide a robot cleaner in which drive wheels stably move with respect to a main body within wheel cover housings with reduced size.

Additional aspects of the disclosure will be set forth in part in the description which follows and, in part, will be apparent from the description, or may be learned by practice of the disclosure.

The object is solved by the features of claim 1.

Advantageous embodiments are disclosed by the subclaims.

Each of the wheel cover housings may include a drive wheel cover housing and a drive motor cover housing, and an isolation wall may be provided between the drive wheel cover housing and the drive motor cover housing.

Each of the drive motors may further include a PCB, and the PCB may be fixed to each of the drive motor cover housing.

Each of the wheel cover housings may be provided with an arc-shaped wheel pivot shaft hole, and each of the pivot rotary shafts of the drive wheels may be installed so as to be movable along the wheel pivot shaft hole.

A length of each of the arc-shaped pivot rotary shafts may be shorter than a length of the arc-shaped wheel pivot shaft hole.

The pivot rotary shafts may be provided on the gear units.

Each of the wheel cover housings may include a suspension formed therein so as to elastically carry out pivotal rotation of each of the drive wheels.

The suspension may connect each of the wheel cover housings and each of the gear units.

The drive motors may be fixed to the main body.

The main body may be provided with wheel cover housings to support the drive wheels, and the drive motors may be fixed to the wheel cover housings and the drive wheels are provided on the wheel cover housing so as to be pivotally rotatable.

Each of the drive motors may further include a PCB, and the PCB may be fixed to each of the wheel cover housings.

Each of the wheel cover housings may include a drive wheel cover housing and a drive motor cover housing, and an isolation wall may be provided between the drive wheel cover housing and the drive motor cover housing.

Each of the drive motors and each of the drive wheels may be connected by a gear unit including two or more gears.

A pivot rotary shaft of each of the drive wheels may be provided on the gear unit.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view illustrating the inside of a robot cleaner in accordance with an embodiment of the present disclosure;
FIG. 2 is a perspective view illustrating the lower portion of the robot cleaner in accordance with the embodiment of the present disclosure;
FIG. 3 is a view illustrating wheel cover housings of the robot cleaner in accordance with the embodiment of the present disclosure;
FIG. 4 is an exploded perspective view illustrating the wheel cover housing and a drive motor of the robot cleaner in accordance with the embodiment of the present disclosure;
FIG. 5 is an exploded perspective view illustrating the drive motor, the wheel cover housing and a drive wheel of the robot cleaner in accordance with the embodiment of the present disclosure; and
FIG. 6 is a cross-sectional view of the wheel cover housing of the robot cleaner in accordance with the embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

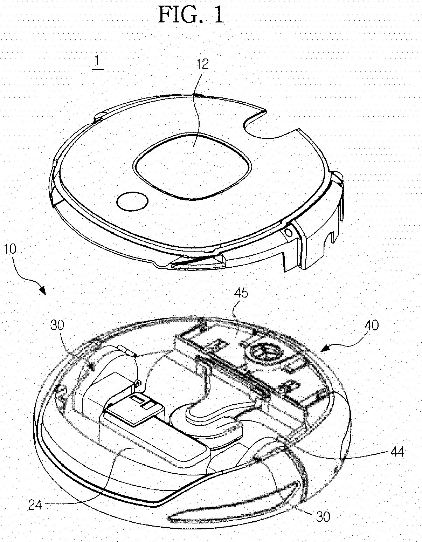

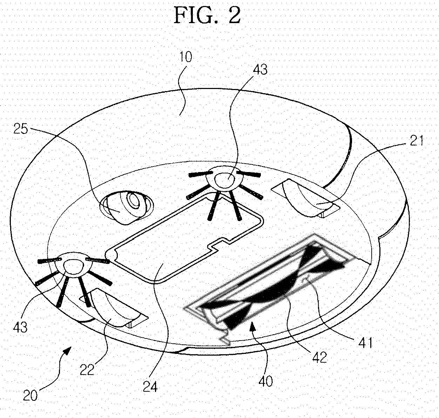

FIG. 1 is a perspective view illustrating the inside of a robot cleaner in accordance with an embodiment of the present disclosure and FIG. 2 is a perspective view illustrating the lower portion of the robot cleaner in accordance with the embodiment of the present disclosure.

With reference to FIGS. 1 to 2, a robot cleaner 1 in accordance with the embodiment of the present disclosure includes a main body 10 forming the external appearance of the robot cleaner 1, a drive device 20 to move the main body 10, and a cleaning device 40 to sweep or scatter dust off a floor on which the main body 10 travels so as to clean the floor.

A plurality of sensors, such as contact sensors and proximity sensors, may be installed on the front portion and the bottom of the main body 10 so as to sense obstacles. For example, a sensor installed on the front portion of the main body 10 is used to sense an obstacle, such as a wall, and a sensor installed on the bottom of the main body 10 is used to sense an obstacle, such as a staircase. Further, a display device 12 is provided on the main body 10 so as to inform a user of data regarding a state or operation of the robot cleaner 1.

The drive device 20 includes a pair of drive wheels 21 and 22 installed at both sides of the central portion of the main body 10 to adjust movement of the robot cleaner 1, a pair of drive motors 23 to supply drive power to the drive wheels 21 and 22, a battery 24 to supply power to the drive motors 23, and a caster 25 installed on the bottom of the front portion of the main body 10 so as to change a rotating angle thereof according to a state of the floor on which the robot cleaner 1 travels. The caster 25 is a wheel provided in the shape of a rotatable roller or caster, and serves to stabilize a pose of the robot cleaner 1 or to prevent the robot cleaner 1 from falling over.

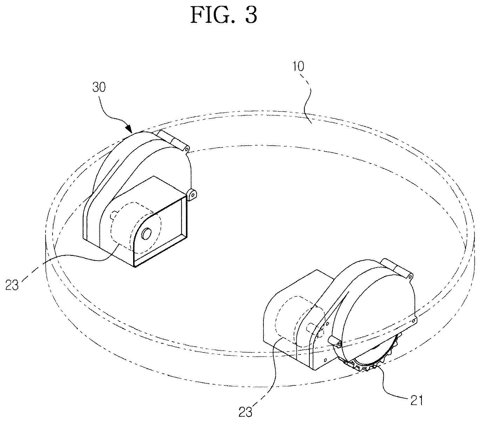

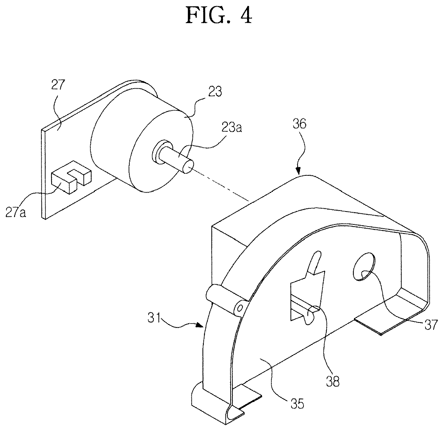

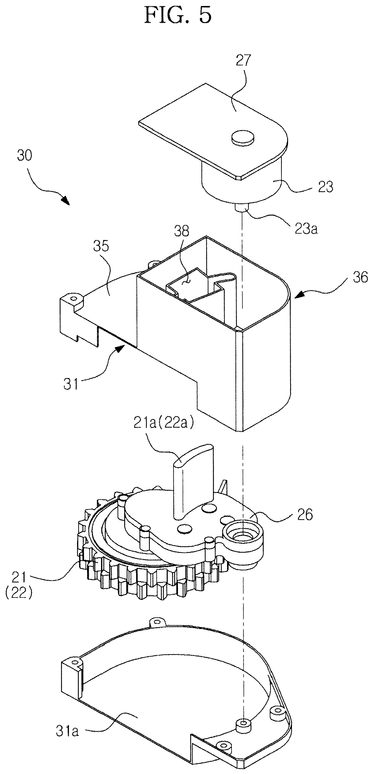

The drive wheels 21 and 22 and the drive motors 23 are installed on the main body 10 through wheel cover housings 30, as shown in FIGS. 3 to 5.

The wheel cover housing 30 includes a drive wheel cover housing 31 and a drive motor cover housing 36. The drive wheel cover housing 31 and the drive motor cover housing 36 are provided such that they are separated in both directions from each other by an isolation wall 35. This structure serves to prevent foreign substances, such as dust supplied from the floor through the drive wheels 21 and 22, from being introduced into the main body 10.

The drive wheel cover housing 31 includes a wheel cover 31a connected to the isolation wall 35 such that the drive wheel 21 or 22 is provided at the inside of the wheel cover 31a, and a motor rotary shaft hole 37 and a wheel pivot shaft hole 38 are provided on the isolation wall 35.

Since the motor rotary shaft hole 37 and the wheel pivot shaft hole 38 are separated from each other, a rotary shaft 23a of the drive motor 23 and a rotary shaft 21a or 22a of the drive wheel 21 or 22 respectively installed within the motor rotary shaft hole 37 and the wheel pivot shaft hole 38 are connected through a gear unit 26 including two or more gears.

The wheel pivot shaft hole 38 of the drive wheel cover housing 31 is provided in an arc shape so that the drive wheel 21 or 22 is movable with respect to the main body 10, and the center of the arc-shaped wheel pivot shaft hole 38 is the same as the center of the motor rotary shaft hole 37. That is, the rotary shaft 21a or 22a of the drive wheel 21 or 22 is coaxial with the rotary shaft 23a of the drive motor 23, and thus the drive wheel 21 or 22 is pivotally rotated while rotating about the drive motor 23. Hereinafter, in order to divide the rotary shaft 23a of the drive motor 23 and the rotary shaft 21a or 22a of the drive wheel 21 or 22 from each other, the rotary shaft 23a of the drive motor 23 is referred to as a drive rotary shaft 23a and the rotary shaft 21a or 22a of the drive wheel 21 or 22 is referred to as a pivot rotary shaft 21a or 22a. Further, the drive wheels are commonly denoted by reference numeral 21 and the pivot rotary shafts of the drive wheels are commonly denoted by reference numeral 21a. Moreover, although this embodiment describes the pivot rotary shaft 21a together with the drive wheel 21 as being installed on the gear unit 26 rotated about the drive rotary shaft 23a of the drive motor 23 in order to reduce the size of the wheel cover housing 30, the position of the pivot rotary shaft 21a is not limited thereto.

The pivot rotary shaft 21a may be provided in an arc shape in the same manner as the wheel pivot shaft hole 38 so as to smoothly achieve pivotal rotation of the drive wheel 21. Here, a length of the arc-shaped pivot rotary shaft 21a is shorter than a length of the arc-shaped wheel pivot shaft hole 38.

The drive motor cover housing 36 provided opposite to the drive wheel cover housing 31 is formed in the shape of a casing having an accommodation space formed therein, and the drive motor 23 and a PCB 27 to control the drive motor 23 are installed within the drive motor cover housing 36. The PCB 27 is electrically connected to a main board (not shown) of the main body 10, and is firmly fixed to the wheel cover housing 30 using a guide protrusion 27a inserted into the wheel pivot shaft hole 38. The drive rotary shaft 23a of the drive motor 23 is connected to the gear unit 26 located in the drive wheel cover housing 31 through the motor rotary shaft hole 37 of the isolation wall 35.

The drive motor 23 is fixed to the main body 10 and the drive wheel 21 is pivotally installed on the main body 10 by the wheel cover housing 30. Further, the isolation wall 35 of the wheel cover housing 30 prevents dust on the floor from being introduced into the main body 10.

Further, the cleaning device 40 includes a main brush 42 provided adjacent to a suction hole 41 formed on the lower surface of the main body 10 to sweep or scatter dust off the floor so as to improve dust suction efficiency, a pair of side brushes 43 installed on the lower surface of both sides of the front portion of the main body 10 to sweep dust on the floor on which the robot cleaner travels toward the suction hole 41, a suction fan 44, a filter (not shown) and a dust collection tray 45.

The main brush 42 includes a drum-shaped brush disposed adjacent to the suction hole 41 in the horizontal direction to sweep or scatter dust off the floor, and a brush motor (not shown) to rotate the brush in the forward movement direction or the backward movement direction. The side brushes 43 are installed at a designated interval at both sides of the front portion of the main body 10, and are rotated in the horizontal direction with respect to the floor so as to sweep dust on the floor on which the main body 10 travels toward the suction hole 41.

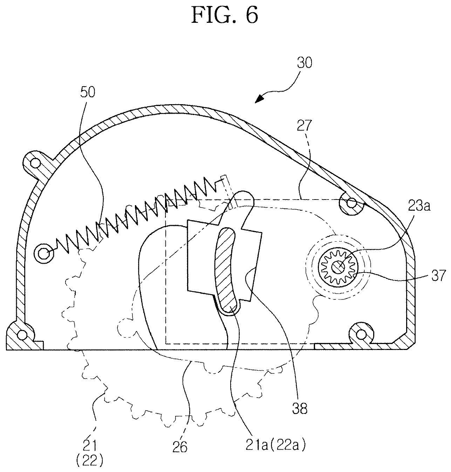

Further, as shown in FIG. 6, a suspension 50 to elastically move the drive wheel 21 is provided between the isolation wall 35 of the wheel cover housing 30 and the gear part 26. In the robot cleaner in accordance with this embodiment, since the drive wheel 21 is moved about the drive motor 23, the suspension 50 may be located within the wheel cover housing 30.

Hereinafter, operation of the drive wheels of the robot cleaner in accordance with the embodiment of the present disclosure having the above configuration will be described.

A pair of drive wheels 21 and 22 is respectively rotated in the forward movement direction or the backward movement direction according to a command of the control unit (not shown), thereby allowing the main body 10 to move forward or backward or to be rotated. For example, if the two drive wheels 21 and 22 are rotated in the same direction, i.e., the forward movement direction or the backward movement direction, the robot cleaner travels forward or backward, if the right drive wheel 22 is rotated in the forward movement direction while the left drive wheel 21 is rotated in the backward movement direction, the robot cleaner is rotated in the leftward direction as seen from the front part of the robot cleaner, or if the both drive wheels 21 and 22 are rotated in the opposite directions, the robot cleaner is rotated in the rightward direction as seen from the front part of the robot cleaner.

When the robot cleaner encounters an obstacle, such as a carpet or a door sill, the drive wheels 21 and 22 move with respect to the main body 10 and thus climbs over the obstacle, and after the robot cleaner has climbed over the obstacle, impact applied to the drive wheels 21 and 22 is alleviated by the suspensions 50. During moving, the drive wheels 21 and 22 are pivotally rotated about the drive motors 23. Then drive motors 23 are fixed to the main body through the drive motor cover housings 36 of the wheel cover housings 30, and the drive wheels 21 and 22 move while being pivotally rotated with respect to the main body 10 through the drive wheel cover housings 31 of the wheel cover housings 30. Therefore, although the drive wheels 21 and 22 move, the drive motors 23 are fixed and thus movement of the robot cleaner is stably carried out. Particularly, the main board of the main body 10 and the PCBs 27 of the drive motors 23 are not connected by wires but may be connected by connectors due to fixing of the drive motors 23 to the main body 10, and thus, although the robot cleaner is used for a long time, electrical connection between the two parts is stable. Further, since the PCBs 27 connected to the drive motors 23 are isolated from the drive wheels 21 and 22 by the isolation walls 35, introduction of external dust into the main body 10 of the robot cleaner is effectively prevented.

As is apparent from the above description, a robot cleaner in accordance with one embodiment of the present disclosure prevents drive motors from moving together with movement of drive wheels during moving the drive wheels, thus being capable of easily climbing over an obstacle, such as carpet or a door sill.

Further, the robot cleaner in accordance with the embodiment of the present disclosure allows PCBs of the drive motors to be isolated from the drive wheels, thus preventing dust on a floor, on which the robot cleaner travels, from being introduced into the main body of the robot cleaner.

Although a few embodiments of the present disclosure have been shown and described, it would be appreciated by those skilled in the art that changes may be made in these embodiments without departing from the principles of the disclosure, the scope of which is defined in the claims.

## Claims

1. A robot cleaner (1) comprising:
a main body (10);
drive motors (23) provided on the main body (10), each of the drive motors (23) including a drive rotary shaft (23a);
drive wheels (21, 22) rotated by rotary force transmitted from the drive motors (23), and
gear units (26) connecting the drive motors (23) and the drive wheels (21, 22);
**characterized by**
wheel cover housings (30) to support the drive wheels (21, 22) so that the drive wheels are pivotally rotated with respect to the main body,
wherein pivot axis of the pivot rotary shafts (21a, 22a) of the drive wheels (21, 22) and the drive rotary shafts (23a) of the drive motors (23) are coaxial with each other.

2. The robot cleaner according to claim 1, wherein:
each of the wheel cover housings (30) includes a drive wheel cover housing (31) and a drive motor cover housing (36); and
an isolation wall (35) is provided between the drive wheel cover housing and the drive motor cover housing.

3. The robot cleaner according to claim 1, wherein each of the drive motors (23) is fixed to the drive motor cover housing (36).

4. The robot cleaner according to claim 2 or 3, wherein:
each of the drive motors (23) further includes a PCB (27); and the PCB (27) is fixed to the drive motor cover housing (36).

5. The robot cleaner according to claim 2, wherein:
each of the wheel cover housings (30) is provided with an arc-shaped wheel pivot shaft hole (38); and
each of the pivot rotary shafts (21a, 22a) of the drive wheels (21, 22) is installed so as to be movable along the wheel pivot shaft hole (38).

6. The robot cleaner according to claim 5, wherein a length of each of the arc-shaped pivot rotary shafts (21a, 22a) is shorter than a length of the arc-shaped wheel pivot shaft hole (38).

7. The robot cleaner according to claim 1, wherein the pivot rotary shafts (21a, 22a) are provided on the gear units (26).

8. The robot cleaner according to claim 1, wherein each of the wheel cover housings (30) includes a suspension (50) formed therein so as to elastically carry out pivotal rotation of each of the drive wheels (21, 22).

9. The robot cleaner according to claim 8, wherein the suspension (50) connects each of the wheel cover housings (30) and each of the gear units (26).

## Patentansprüche

1. Reiningungsroboter (1), welcher aufweist:
einen Hauptkörper (10);
Antriebsmotoren (23), die am Hauptkörper (10) vorgesehen sind, wobei jeder der Antriebsmotoren (23) eine Antriebsdrehwelle (23a) umfasst;
Antriebsräder (21, 22), die durch eine Drehkraft übertragen durch die Antriebsmotoren (23) drehbar sind, sowie Getriebeeinheiten (26), welche mit den Antriebsmotoren (23) und den Antriebsrädern (21, 22) verbunden sind,
**gekennzeichnet durch**
Radabdeckungsgehäuse (30) zum Abstützen der Antriebsräder (21, 22), so dass die Antriebsräder schwenkbeweglich bezüglich des Hauptkörpers sind, wobei Schwenkachsen der Schwenkdrehwellen (21a, 22a) der Antriebsräder (21, 22) und die Antriebsdrehwellen (23a) der Antriebsmotoren (23) koaxial zueinander sind.

2. Reinigungsroboter nach Anspruch 1, wobei jedes der Radabdeckungsgehäuse (30) ein Antriebsradabdeckungsgehäuse (31) und ein Antriebsmotorabdeckungsgehäuse (36) aufweist und eine Isolationswand (35) zwischen dem Antriebsradabdeckungsgehäuse und dem Antriebsmotorabdeckungsgehäuse vorgesehen ist.

3. Reinigungsroboter nach Anspruch 1, wobei jeder der Antriebsmotoren (23) an dem Antriebsmotorabdeckungsgehäuse (36) befestigt ist.

4. Reinigungsroboter nach Anspruch 2 oder 3, wobei jeder der Antriebsmotoren (23) weiterhin eine Leiterplatte, PCB, (27) aufweist und die PCB (27) an dem Antriebsmotorabdeckungsgehäuse (36) befestigt ist.

5. Reinigungsroboter nach Anspruch 2, wobei jedes der Radabdeckungsgehäuse (30) mit einem bogenförmigen Radschwenkwellenloch (38) ausgebildet ist und jede der Schwenkdrehwellen (21a, 22a) der Antriebsräder (21, 22) so installiert ist, dass sie entlang des Radschwenkwellenlochs (38) bewegbar ist.

6. Reinigungsroboter nach Anspruch 5, wobei eine Länge einer jeden der bogenförmigen Schwenkdrehwellen (21a, 22a) kürzer als eine Länge des bogenförmigen Radschwenkwellenloches (38) ist.

7. Reinigungsroboter nach Anspruch 1, wobei die Schwenkdrehwellen (21a, 22a) an den Getriebeeinheiten (26) vorgesehen sind.

8. Reinigungsroboter nach Anspruch 1, wobei jedes der Radabdeckungsgehäuse (30) eine darin gebildete Aufhängung (50) aufweist, um elastisch eine Verschwenkbewegung jedes der Antriebsräder (21, 22) durchzuführen.

9. Reinigungsroboter nach Anspruch 8, wobei die Aufhängung (50) jedes Radabdeckungsgehäuses (30) und jede Getriebeeinheit (26) verbindet.

## Revendications

1. Robot nettoyeur (1) comprenant :
un corps principal (10) ;
des moteurs d'entraînement (23) disposés sur le corps principal (10), chacun des moteurs d'entraînement (23) incluant un arbre rotatif d'entraînement (23a) ;
des roues motrices (21, 22) mises en rotation par une force de rotation transmise par les moteurs d'entraînement (23), et
des unités d'engrenage (26) reliant les moteurs d'entraînement (23) et les roues motrices (21, 22) ;
**caractérisé par**
des boîtiers de protection des roues (30) pour supporter les roues motrices (21, 22) de telle manière que les roues motrices tournent de manière pivotante par rapport au corps principal,
où l'axe de pivotement des arbres rotatifs de pivotement (21a, 22a) des roues motrices (21, 22) et les arbres rotatifs d'entraînement (23a) des moteurs d'entraînement (23) sont coaxiaux.

2. Robot nettoyeur selon la revendication 1, où :
chacun des boîtiers de protection des roues (30) inclut un boîtier de protection de roue motrice (31) et un boîtier de protection de moteur d'entraînement (36) ; et
une paroi isolante (35) est disposée entre le boîtier de protection de roue motrice et le boîtier de protection de moteur d'entraînement.

3. Robot nettoyeur selon la revendication 1, où chacun des moteurs d'entraînement (23) est fixé au boîtier de protection de moteur d'entraînement (36).

4. Robot nettoyeur selon la revendication 2 ou 3, où :
chacun des moteurs d'entraînement (23) inclut en outre un PCB (27) ; et le PCB (27) est fixé au boîtier de protection de moteur d'entraînement (36).

5. Robot nettoyeur selon la revendication 2, où :
chacun des boîtiers de protection de roue (30) est pourvu d'un trou d'arbre de pivotement de roue en forme d'arc (38) ; et
chacun des arbres rotatifs de pivotement (21a, 22a) des roues motrices (21, 22) est installé de manière à être déplaçable dans le trou d'arbre de pivotement de roue (38).

6. Robot nettoyeur selon la revendication 5, où une longueur de chacun des arbres rotatifs de pivotement (21a, 22a) en forme d'arc est plus courte qu'une longueur du trou d'arbre de pivotement de roue (38) en forme d'arc.

7. Robot nettoyeur selon la revendication 1, où les arbres rotatifs de pivotement (21a, 22a) sont disposés sur les unités d'engrenage (26).

8. Robot nettoyeur selon la revendication 1, où chacun des boîtiers de protection de roue (30) inclut une suspension (50) formée dans ces-derniers, de manière à effectuer une rotation pivotante de chacune des roues motrices (21, 22) de manière élastique.

9. Robot nettoyeur selon la revendication 8, où la suspension (50) relie chacun des boîtiers de protection de roue (30) et chacune des unités d'engrenage (26).
